# EUROPEAN PATENT SPECIFICATION

(11) **EP 3 334 928 B1**
(45) Date of publication and mention of the grant of the patent: **29.07.2020**
(21) Application number: 16787731.5
(22) Date of filing: 12.08.2016
(51) Int. Cl.: F03D 5/00

(54) **AIRCRAFT FOR ENERGY PRODUCTION WITHOUT ELECTRICAL POWER TRANSMISSION BETWEEN GROUND AND AIRCRAFT**
FLUGZEUG FÜR ENERGIE-PRODUKTION OHNE ÜBERSENDUNG DER ELEKTRISCHEN LEISTUNG ZWISCHEN BODEN UND FLUGZEUG
AÉRONEF POUR LA PRODUCTION D'ÉNERGIE SANS TRANSMISSION DE PUISSANCE ÉLECTRIQUE ENTRE LE SOL ET L'AÉRONEF

(30) Priority: 14.08.2015 EP 15181056
(43) Date of publication of application: 20.06.2018
(73) Proprietor: Kitemill AS, 5704 Voss (NO)
(72) Inventor: BU, Olav Aleksander, 6982 Holmedal (NO)
(74) Representative: Plougmann Vingtoft a/s
(86) International application number: PCT/EP2016/069274
(87) International publication number: WO 2017/029231

(56) References cited:
- WO-A1-2010/148373
- US-A- 3 987 987
- US-A1- 2010 013 226
- US-A1- 2010 032 948

## Description

### FIELD OF THE INVENTION

The present invention relates to a tethered aircraft including rigid kites used for energy production or propulsion having a ground based generator without electrical transmission between ground and aircraft. The present invention relates inter alia to a the thered aircraft used for for power generation in a ground based generator without electrical transmission between ground and aircraft. The aircraft is typically used in vertical take-off and landing mode. The field of the invention may be abbreviated as Aircraft Without Electrical power transmission to ground (and preferably also without power transmission from ground to aircraft) and for vertical Take-Off and Landing.

### BACKGROUND OF THE INVENTION

Tethered aircraft with propellers have been suggested as a machinery for producing electrical energy. In the suggested tethered aircraft know to the inventors, the generators are arranged on the aircraft and electrical energy produced is transmitted to ground during flight through an electrical conductive tether. An example is given in WO2010/148373 A1.

While this has proven to be a workable solution for producing electrical energy from wind, the inventors have realised that by scaling up such tethered aircrafts with on-board generator and transmission of electrical energy to ground result in that the electrical conducting tether become quite heavy and expensive. Suggestion have been made to produce the electrical conductive tether from lighter materials than copper such as aluminium. However, still the mass of the tether becomes high and a further up-scaling may result in that the lift produced is only sufficient to carry the mass of the tether and the aircraft. The end result seems to be that the efficiency to produced electrical energy decreases with increasing size of the tethered aircraft and length of the tether.

This reduction of efficiency could be solved by up-scaling the energy production by increasing the number of aircraft instead of dimensionally up-scaling the tethered aircraft. However, a characteristic of a tethered aircraft with electrical conducting tether is that the flight patterns includes a circular movement at a constant tether length, the area swept by such tethered aircraft is cone shape with the tip of the cone being at the position where the tether is fastened to a ground position. This means that the number of tether aircrafts possible to install at a given location is limited in order to avoid in-air collisions between the aircrafts.

Thus, the inventors has realized that an improved tethered aircraft would be advantageous, and in particular a more efficient and/or reliable tethered aircraft would be advantageous.

### OBJECT OF THE INVENTION

An object of the present invention is to provide an alternative to the prior art.

In particular, it may be seen as a further object of the present invention to provide a tethered aircraft that solves the above mentioned problems of the prior art with

### SUMMARY OF THE INVENTION

Thus, the above described object and several other objects are intended to be obtained in a first aspect of the invention by providing a tethered aircraft system for producing electrical energy, the system preferably comprises:
- a ground positioned electrical generator,
- an aircraft comprising
   - one or more activatable propellers each connected to a motor-generator,
   - an on-board electrical energy storage connected to the motor-generator(s),
   - moveable control surfaces connected to the wings of the aircraft for changing the lift coefficient and/or drag coefficient of the aircraft either locally or globally for the aircraft,
- a tether connected at one end to the aircraft and distal thereto connected to said generator so that a pull in the tether result in a rotation of generator's rotor, wherein tether is electrically isolated from the electrical energy storage and from the power circuit of motor-generator.

Preferably, the system may be adapted to activate the one or more, such as all, of said activatable propellers at least parttime during reeling-in to produce electrical power. Thereby, the electrical energy storage may be charged during reeling-in.

Preferably, the system may be adapted to activate the one or more, such as all, said activatable propellers at least parttime only during reeling-in to produce electrical power.

Preferably and as presented herein, the activation of the activatable propellers to produce electrical power is to produce electrical power to charge the onboard batteries and/or to power electronic onboard device(s). The main electrical production by the system is preferably produced by the ground based electrical generator.

In the present context, terms are used in a manner being ordinary for the skilled person. However, some of the terms used are detailed below:
*Electrically isolated* is preferably used to means that a current is prevented from flowing from the elements being isolated from each other. Such electrical isolation is well known skilled person and is preferably embodied in such a manner that no current flow occurs when the voltage potential is below 10 kilo volts, such as below 1 kilo volts.

*Without electrical power transmission* is preferably used to mean that while the aircraft may be electrical connected to a ground position, such electrical connection is used for controlling purposes, such as to transmit electrical signals, and surplus of electrical energy produced on-board the aircraft is stored in on-board electrical energy storages, such as batteries.

*Reeling-out* is preferably used to disclose the action produced by the aircraft when moving away from a ground base position while being connected by a line to the ground base position.

*Reeling-in* is preferably used to disclose the action produced by the aircraft when moving towards a ground base position while still being connected by a line to the ground base position.

*Ground* is used to mean a position distal to the end of the line connected the aircraft.

*Angle of attack* is used to mean the angle between the chord line of the wing of the aircraft and the vector representing the relative motion between the aircraft and the atmosphere. Since a wing can have twist, a chord line of the whole wing may not be definable, so an alternate reference line is simply defined. Often, the chord line of the root of the wing is chosen as the reference line. Another choice is to use a horizontal line on the fuselage as the reference line (and also as the longitudinal axis).

*Propeller* is used to indicate a mechanism having a set of (one or more) aerodynamically shaped blades which may be used either as a propeller to provide thrust or as a wind turbine for extracting energy out of the wind.

*Electrical energy storage* is used broadly to designate a device capable of storing electricity and includes batteries and capacitors.

*Tethered aircraft* is used to mean an aircraft which is tethered to a ground position by use of a tether in the form of flexible line, such as a rope, chord or the like, typically made from Polyethylene, Kevlar, and/or Carbon. While the flexible line may be made from or including an electrical conductive material, such as a wire made from metal, the tether is electrically isolated from the motor-generator(s) as well as from the electrical energy storage of the aircraft. In case of use of such electrical conductive tethers, the tether may be used for transmission of low electrical current signals, such as control signals and signals produced by transducers on the aircraft. It is further noted, that during use, the tether may absorb conductive substances such as water, salt, etc. However, this is not a conductive effect relied upon in connection with the present invention and is often aimed at being avoided, e.g. in order to avoid influence of an atmosphere with high static charge. Preferably, the aircraft is tethered to a ground position by a single tether. As presented herein, the tether may close to the airfoil, such as between 1- 10 metres from the aircraft, bifurcate or split into a number of separate lines each being at ends distal to the bifurcation or splitting position connected at different positions of the aircraft.

*Motor-generator* is used to mean an electrical machinery which function as an electrical motor when supplied with electrical power, and which function as an electrical generator producing electrical power when supplied with mechanical energy. Such motor-generators has a rotor and a stator.

*Power circuit* of motor-generator is preferably used to mean the parts and/or elements of the motor-generator either generating electrical power by a torque rotation on the rotor of the motor-generator, or consuming electrical power to produce a torque on the rotor of the motor-generator.

*Rigid kite* is used preferably to refer to an aerodynamic device producing lift when exposed to winds and which contrary to soft kites where the shape of the kite is defined by one or more air inflatable elements and the connections between the tether and kite, has an overall shape being defined static elements such as beams extending longitudinal and/or transversely of the kite.

*Moveable control surfaces* is preferably used to mean elements such as flaps, rudders and the likes, and to means elements which are e.g. hingedly connected and form part of e.g. a wing of the aircraft.

Preferably, the rotor of the ground positioned electrical generator may be adapted to wind-up tether during reeling in of the aircraft.

In preferred embodiments, the system may preferably be adapted to detect reeling-in by detecting, such as observing, the direction in which the tether moves. Alternatively or in combination therewith the system may preferably be adapted to detect reeling-in by determining the rotational direction of a winch on which the tether is connected at ground. Alternatively or in combination with the above, the system may preferably be adapted to detect reeling-in by measuring, preferably at the aircraft, the tension in the tether. Alternatively or in combination with the above, the system may preferably be adapted to detect reeling-in by the system comprising an altitude meter, preferably arranged on-board the aircraft, configured to detect or indicate reeling-in as a decreasing altitude. Alternatively or in combination with above, the system preferably may be adapted to detect reeling-in by analysing the electrical power produced, if any, by the ground positioned electrical generator and detecting reeling-in by a negative electrical power production. Alternatively, or in combination with the above, the system may preferably be adapted to detect reeling-in by measuring the tether speed, and detecting reeling-in when the tether speed preferably is at least 2 times, such as at least 3 times, preferably at least 4 times and even 5 times higher than a typical reeling-out speed, such as 1/3 of the wind speed.

Preferably, one or more, such as all of said activatable propellers may be adapted to be activated during reeling-in to produce electrical power only if the wind speed, preferably the relative wind speed, is above a certain limit.

Preferably, the aircraft may further comprise an anemometer or pitot tube arranged on the aircraft configured for determining the wind speed at the altitude of the aircraft.

Preferably, the system may be adapted to activate the one or more, such as all, activatable propellers to produce electrical power only during reeling-in.

Preferably, the system may be adapted to activate the one or more, such as all, activatable propellers to produce electrical power only part-time during reeling-in, such as activated to produce electrical power during the first 50%, such as during the first 40%, preferably during the first 30% of the time during which reeling-in takes place.

Preferably, one or more such as each of the propellers may be selectively activatable to power the motor-generator to produce electrical power preferably during the reelin-in phase.

Preferably, the system may be adapted to store electrical power produced by the motor-generator in the electrical energy storage if the wind speed is sufficient to provide reeling-out and/or reeling-in without the need for the propellers to add lift, by the propellers producing trust, to the aircraft.

Preferably, one or more, such as each of the propellers may be adapted to be activated to produce thrust by supplying the motor-generator with electrical energy from the electrical energy storage if the wind speed is in-sufficient to allow the aircraft to glide on its own motion to towards the ground based generator during reeling-in.

Preferably, one or more, such as each of the propellers may be adapted to be activated to produce thrust by supplying the motor-generator with electrical energy from the electrical energy storage if the wind speed is in-sufficient to allow the aircraft to glide on its own motion away from the ground based generator during reeling-out.

Preferably one or more, such as each of the propellers may be adapted to be activated by being connected to the motor-generator by a clutch between the propellers and motor-generator, said clutch being controllable between engagement and dis-engagement.

Preferably one or more, such as each of the propellers may be adapted to be activated by connecting the motor-generator to the electrical energy storage by a switch electrically connecting and dis-connecting the motor-generator with the electrical energy storage.

Preferably, one or more, such as each the propellers may be activatable by each of the blades of the propeller being mounted at their root controllable rotatable along the spanwise direction of each blade, so that the yaw angle of each blade can be controlled.

Preferably, one or more, such as each of the propellers may be activatable by each of the blade of the propellers being mounted at the root controllable rotatable along an axis parallel to the chord of the blade at the root, so that the pitch angle can be controlled.

Preferably, one or more, such as each of the propellers(6) may be activatable activatable by being retractable from a sleeve in which the blades are located.

Preferably, the aircraft may comprise a controlling unit, said control unit preferably
- being connected to and being adapted to control the control surface in response to a control signal transmitted the control unit, and
- preferably comprising a positioning system for determining position data such as the altitude, the yaw angle, the roll angle and pitch angle of the aircraft.

Preferably, the control unit may have a pre-determined flight pattern stored, typically in terms of spatial position coordinates, and controls the control surfaces to obtain the predetermined flight pattern.

Preferably, the aircraft may comprise a transceiver for communication with a ground based transceiver, the transceiver of the aircraft preferably being adapted to transmit position data obtained by the positioning system to the ground based transceiver and receive control signal from the ground based transceiver.

Preferably, the ground base transceiver and the transceiver of the aircraft may be wireless.

In a second aspect, the invention relates to a method for producing electrical energy, the method utilises a tethered aircraft system, preferably according to first aspect of the invention, and the method comprises when the aircraft is airborne:
- controlling the lift coefficient of the aircraft by movement of the control surfaces and/or by activating one or more of the activatable propellers so that a pull is produced in the tether sufficient to rotate the rotor of the ground positioned electrical generator resulting in a reeling-out of the aircraft,
- controlling the lift coefficient and/or draft coefficient of the aircraft either locally or globally by movement of the control surfaces and/or by activating one or more of the activatable propellers so that the aircraft performs a gliding motions towards the ground positioned electrical generator resulting in a reeling-in of the aircraft.

The method may preferably further comprise activating the one or more, such as all, of said activatable propellers at least parttime during a reeling-in to produce electrical power. Thereby, the electrical energy storage may be charged during reeling-in. It is noted, that while the method may included activation of the propellers to produce electrical energy at least part time during each reeling-in, the method also includes scenarios where the activation to produce electrical power is not activated during reeling-in. This is typically due to the reeling-out and reeling-in are repeated a plurality of time and if for instance the electrical energy storage is fully charged, the activation to produce electrical power is not need and is therefore preferably not launched.

In some preferred embodiments of the method, the method comprises activating the one or more, such as all, said activatable propellers at least parttime only during reeling-in to produce electrical power.

The method may preferably further comprise detecting reeling-in by detecting, such as observing, the direction in which the tether moves. Alternatively or in combination thereto, the method may preferably further comprise detecting reeling-in by determining the rotational direction of a winch on which the tether is connected at ground. Alternatively or in combination with the above, the method may preferably further comprise detecting reeling-in by measuring, preferably at the aircraft, the tension in the tether. Alternatively or in combination with the above, the method may preferably further comprise detecting reeling-in by by use of altitude meter, preferably arranged on-board the aircraft, configured to detect or indicate reeling-in as a decreasing altitude. Alternatively or in combination with the above, the method may preferably further comprise detecting reeling-in by analysing the electrical power produced, if any, by the ground positioned electrical generator and detecting reeling-in by anegative electrical power production. Alternatively or in combination with the above, the method may preferably further comprise detecting reeling-in by measuring the tether speed, and preferably detecting reeling-in when the tether speed is preferably at least 2 times, such as at least 3 times, preferably at least 4 times and even 5 times higher than a typical reeling-out speed, such as 1/3 of the wind speed.

Preferably, all of said activatable propellers are activated during reeling-in to produce electrical power only if the wind speed, preferably the relative wind speed, is above a certain limit.

Preferabley, the method may comprise determining the windspeed at the altitude of the aircraft, preferably by use of an anemometer or pitot tube arranged on the aircraft.

Preferably, the one or more, such as all, activatable propellers may be activated to produce electrical power only during reeling-in.

Preferably, the one or more, such as all, activatable propellers may be activated to produce electrical power only part-time during reeling-in, such as activated to produce electrical power during the first 50%, such as during the first 40%, preferably during the first 30% of the time during which reeling-in takes place.

Preferably, controlling of the lift coefficient during reeling out may be carried out so as to positioning the aircraft at an angle of attack between 0 and 25 degrees.

Preferably, the electrical power produced by the motor-generator may be stored in the electrical energy storage, preferably if the wind speed is sufficient to provide reeling-out and/or reeling-in without the need for the propellers to add lift, by the propellers producing trust, to the aircraft.

Preferably, one or more, such as each, of the one or more propellers may be activated to produce thrust by supplying the motor-generator with electrical energy from the electrical energy storage preferably if the wind speed is in-sufficient to allow the aircraft to glide on its own motion to towards the ground based generator during reeling-in.

Prefarably one or more, such as each, of the one or more propellers may be activated to produce thrust by supplying the motor-generator with electrical energy from the electrical energy storage preferably if the wind speed is in-sufficient to allow the aircraft to glide on its own motion away from the ground based generator during reeling-out.

Preferably, one or more, such as each, of the one or more propellers may be activated by being connected to the motor-generator by engaging a clutch between the propellers and motor-generator, said clutch being controllable between engagement and dis-engagement.

Preferably one or more, such as each, of the one or more propellers may be activated by connecting the motor-generator to the electrical energy storage by a switch electrically connecting and dis-connecting the motor-generator with the electrical energy storage.

Preferably, one or more, such as each, of the one or more propellers may be activated by each of the blades of the propellers being mounted at their root controllable rotatable along the spanwise direction of each blade, and by setting the yaw angle of each blade.

Preferably, one or more, such as each, of the one or more propellers may be activated by each of the blade of the propellers being mounted at the root controllable rotatable along an axis parallel to the chord of the blade at the root, and by setting the pitch.

Preferably, one or more, such as each, of the one propellers may be activated by being retractable from a sleeve in which the blades are located.

The first, and second aspect of the present invention may each be combined with any of the other aspects. These and other aspects of the invention will be apparent from and elucidated with reference to the embodiments described hereinafter and in the accompanying claims.

### BRIEF DESCRIPTION OF THE FIGURES

The present invention and preferred embodiments thereof will now be described in more detail with reference to the accompanying figures. The figures show ways of implementing the present invention and are not to be construed as being limiting to other possible embodiments falling within the scope of the attached claim set.
Figure 1A and 1B discloses schematically a first embodiment of the invention,
Figure 2 discloses schematically an energy producing cycle according to the present invention,
Figure 3 discloses schematically an aircraft with de-icing elements according to a preferred embodiment,
Figure 4 discloses schematically an aircraft with vertical axis propellers arranged in a through-going opening of the wings,
Figure 5 discloses schematically an aircraft with vertical axis propellers arranged in a through-going opening, the through-going opening is closable by a retractable cover,
Figure 6 discloses schematically a further embodiment of an aircraft having two fuselages connected through the main wing,
Figure 7 discloses schematically a further embodiment of the present invention having a tilt-able propeller,
Figures 8 and 9 disclose further embodiments of an aircraft according to the present invention; in the embodiment shown, the pitch angle of each propeller blade may be regulated independently or collectively - figure 9 is a cross sectional view through a propeller embodied in the wing,
Figure 10 discloses schematically an embodiment of an aircraft with co-axial arranged propellers according to the present invention, and
Figure 11 discloses schematically a recharging phase according to a preferred embodiment of the invention.

### DETAILED DESCRIPTION OF PREFERRED EMBODIMENTS OF THE INVENTION

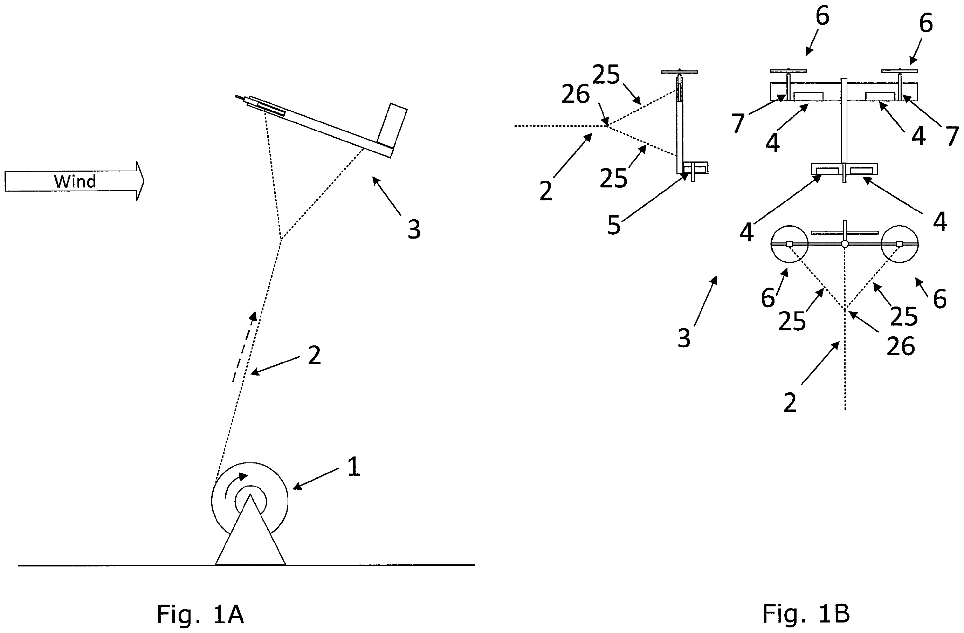

Reference is made to fig. 1a and 1b disclosing schematically a first embodiment of a tethered aircraft system for producing electrical energy according to the invention. As shown in fig. 1a, an aircraft 3 is connected through a tether 2 to a ground positioned electrical generator 1. A winch 9 (not shown) connects the ground based electrical generator 1 with tether 2, and when the aircraft 3 is in it ground position (close to the winch) the tether is reeled-up on the winch. When the aircraft 3 reels-out, the tension provided in the tether 2 (from the lift produced by the aircraft 3) will rotate the winch 9 and thereby, through it connection to the electrical generator 1, rotate the shaft of the generator 1. The winch 9 may be biased towards the position where the tether 2 is reeled-up to provide an up-winding of the tether 2 during reeling in. Alternatively, the winding up may be provided by a motor. However, during the reeling-in motion, the shaft of the generator 1 is, typically, not rotated by the tether.

Fig. 1b shows an embodiment of an aircraft 3 according to the present invention in three different views: upper right drawing - seen from above; upper left drawing - seen from a side; lower right drawing - seen from the front. As disclosed in fig. 1b the aircraft 3 comprising propellers 6. These propellers 6 are each connected to a motor-generator and are activatable in the sense that the can be set into action either as
- wind turbines where they are used to rotate the motor-generator to produce electrical energy,
- propellers where electrical energy stored on-board the aircraft in a battery (not shown) are used to power the motor-generator whereby the propellers rotate and produced trust,
- idling where no energy is produced by the motor-generator or the motor-generator is not powered by electrical energy.

As the propellers 6 are activatable, this is disclosed in fig. 1a by omitting the propellers in that figure.

Further, as disclosed in fig. 1, the tether 2 is connected to the aircraft through bridles 25 connected to the tether 2 at position 26 in fig. 1. The actual length, number and position of connection to aircraft of bridles 25 may vary significantly compared to fig. 1 and are selected based on e.g. the controllability of the aircraft 3 by the control surfaces 4, 5 as higher controllability fewer bridles 25.

As disclosed in fig. 1b, it is generally preferred to configure the aircraft 3 to comprise control surfaces 4 on the main wings, that is the wings that generate most of the lift of the aircraft 3, and on the tail wings; these control surfaces 4 may comprise, flaps, spoilers, elevators and/or ailerons, Further, it is preferred to have control surfaces on the tail; such control surfaces may comprise a rudder.

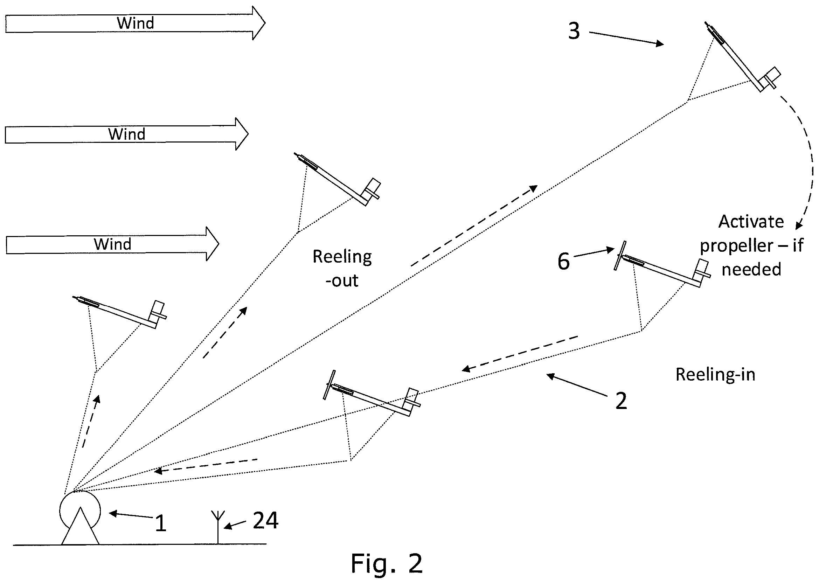

Fig. 2 illustrates schematically an energy producing cycle according to the present invention. It is noted that the disclosed cycle typically is repeated as long as the wind conditions allows it and a need for production of electricity exists. However, upon repetition, the aircraft will not enter to its ground position but the reeling-in will typically be aborted at a certain height above ground where-after the reeling-out is commenced.

As disclosed in fig. 2, the aircraft 3 takes-off from its ground position in close vicinity to the generator 1 and starts to fly upwardly and downstream the wind. In the scenario disclosed in fig. 2, the wind is sufficiently strong to lift the aircraft 3 up and downstream. During the up- and downwardly flight, the aircraft 3 is set at an angle of attack generating most lift without risking stall. At the end of the reeling out phase, the aircraft is adjusted to provide an inflight towards the generator 1. This is typically done by adjusting the angle of attack to an angle of attack allowing the aircraft 3 to glide back towards the generator, by operating the control surfaces 4 to provide the aircraft 3 with the sufficient lift to glide.

The control surfaces are set at the desired position by use of actuators (not shown). These actuators are connected to a controlling unit on-board the aircraft 3 communicating with a ground positioned controlling unit. The communication between the aircraft 3 and the ground based controlling unit is typically provided by radio communication indicated in fig. 2 by the antenna 25. Alternatively, the tether 2 may be applied with data communication wires.

The communication between the aircraft 3 and the ground based controlling unit is preferably two-way communication and the on-board controlling unit is typically equipped with a navigation (such as a gps based system) system so as to communicate e.g. position including altitude, speed, and other data of the aircraft 3 needed for controlling the flight of the aircraft 3 to the ground positioned controlling unit. As will be disclosed in further details below, the propellers 6 are activatable to produce thrust or electrical energy stored on-board and the charging state of the on-board electrical energy storage is preferably also communicated to the ground based controlling unit.

However, all the data needed to control the aircraft 3 may be generated on-board in response to on-board sensors whereby the aircraft 3 is capable of operating in a autonomy manner.

As indicated in fig. 2, the glide back flight may advantageously be assisted by activating the propellers to avoid the aircraft from falling to rapidly which could otherwise mean that the aircraft 3 would not come back to the generator but be at a ground position in distance away from the generator 1.

Thus, during the reeling-out the aircraft 3 is controlled to produce maximum lift by controlling the control surfaces 4. During reeling-in, the aircraft 3 is controlled to have a glide ratio allowing it to glide back towards the generator 1 without producing excessive tension in the tether 2, that is the tension in the tether 2 is ideally only produced by the weight of the tether 2 being suspended between the aircraft 3 and the generator 1 thereby the winding up can be performed with a minimal use of energy.

As indicated in fig. 2, the propellers 6 are activated during reeling-in. The propellers may be activated either to produce thrust or to produce electrical energy stored on-board the aircraft 3.

Reeling-in can be detected in different ways, e.g. by detecting, such as observing, the direction in which the tether moves; if it moves towards the ground, the aircraft can be determined as being in a reeling-in situation. Another possibility is to determining the rotational direction of a winch on which the tether is connected at ground. Once it is determined that the aircraft is in a reeling-in situation, this can be communicated to the on-board controlling unit of the aircraft for activating one or more, such as all, of the activatable propellers to produce electrical power. The communication to activate the propellers can be carried out by radio transmitting a control signal from a ground based transmitter of the ground based controlling unit to an on-board receiver of the aircraft.

In addition to the reeling-in detection, it may be preferred to activate one or more, such as all of activatable propeller to produce electrical power only if the wind speed is above a certain limit. The limit is preferably selected so that flight of the aircraft is not altered to an extent where the lift produced is lower than what is required to allow the aircraft to glide back to the generator. As the wind speed varies with the height above the ground, the wind speed is prefereably determined at the height of the aircraft e.g. by anemoter(s) or pitot tubes arranged on the aircraft configured for determining the wind speed at the altitude of the aircraft. This further has the advantage that as the lift is produced by the relative (induced) wind resulting from the aircraft flying, the movement of the aircraft may result in that electrical power may be generated by activatable propellers even though the wind if measured from ground would indicate that they should not be activated (due to insufficient lift produced).

Reeling-in may also be detected on-board the aircraft. For instance, the tension in the tether may be measured and as the tension in the tether is higher during reeling-out than during reeling in, the tension can be used to detect reeling-in.

Further, an altitude meter e.g. arranged on-board the aircraft configured to detect reeling-in as a decreasing altitude may also be used to detected reeling-in as reeling-in typically is characterised by a decreasing altitude of the aircraft. However, it is noted that a flight path may include - during reeling-out - a spiralling motion and if that is the case, a detection of reeling-in based on altitude can be seen as an indicator on reeling-in and the indication could advantageously be combined with e.g. a detection of the movement of the tether or other detections, e.g. as disclosed herein to conclude that the motion is in fact reeling-in.

An preferred embodiment of detecting reeling-in is based analysing the electrical power is produced (if any) by the ground positioned electrical generator 1, since the electrical power produced is higher during reeling-out than during reeling-in. Thus, detection of reeling-in can be accomplished detecting a negative electrical power productioncompared to a positive electrical power production observed during reeling-out; by negative electrical power production is meant that the generator is supplied with electricity and operates as a motor for reeling-in the tether. Thus, during reeling-in, the ground positioned electrical generator 1 does typically consume some electrical power and this lack of produced electrical power can be used to determine that the aircraft is in a reeling-in situation.

A further method for detecting reeling-in is based on measuring the tether speed. During reeling-in, the ground based generator typically reels in the tether with a speed that is up to 5 times higher than a typical reeling-out speed (typically equal to one third of the wind speed). Thus, reeling-in can be determined when the tether speed is at least 2 times, such as at least 3 times, preferably at least 4 times and even 5 times higher than a typical reeling-out speed. Example: As the aircraft system will not produce energy is conditions higher than 25 m/s this means that the maximum reel-out speed is 8 m/s. Reeling in on the other hand will typically occur with 5* 4 m/s or at 20 m/s regardless of the prevailing wind speed.

Still further, the tether as such has an length, and reeling-in can be determined based on the observing when the full length of the tether has been reeled-out.

In preferred embodiments, the one or more activatable propellers are only activated to produce electrical power during reeling-in. In still further embodiments, the one or more activatable propellers are only activated to produced electrical power part-time during reeling-in. In the latter case, the propellers may be activated to produce electrical power during the first 50%, such as during the first 40%, preferably during the first 30% of the time during which reeling-in takes place.

The propellers 6 are used to produce thrust during reeling in case the wind is of insufficient speed to provide a glide ratio allowing the aircraft to glide back towards the generator 1 and by activating the propellers 6 to produce thrust the movement of the aircraft may be assisted by the thrust.

As disclosed above, during reeling-in, the propellers 6 may be activated to produce electrical energy if the speed of the wind is stronger than what is needed to provide a glide-back to the generator. By activating the propellers 6 to produce energy, the forward movement of the aircraft 3 may be slowed down resulting in that the glide ratio is changed towards a faster decent.

Similarly, the propellers 6 may be activated during reeling-out. For instance, if the wind speed is in-sufficient to allow the aircraft 3 to take-off, the propellers 6 may be activated to produce a thrust which may assist the aircraft 3 during take-off. Typically, when the aircraft 3 reach a higher altitude, the wind speed is sufficient to generate the required lift to produce a reeling-out with the propellers 6 inactivated. Alternatively, if the wind speed is higher than what is needed to provide a reeling-out, the propellers 6 may be activated to produce electrical energy which is stored on-board for later use (that is when a thrust is needed or desired). The activation and deactivation of the propellers 6 are controlled by the on-board controlling unit, typically in response to control signals received from the ground positioned controlling unit.

In the following a number of different embodiments of an aircraft 3 according to the present invention will be disclosed in details. It is generally preferred that the systems and aircraft disclosed herein have one or more activatable propellers each connected to a motor-generator and on-board electrical energy storage means connected to the motor-generator(s). It is noted that this may also include that one or more propellers being connected to a motor only which motor is then powered the on-board electrical energy storage.

### On bear-trapping and haul down

While it is disclosed above, that it is preferred to place the aircraft 3 in a position allowing it to glide back to ground, a landing, in particular, of the aircraft may advantageously be accomplished by hauling the aircraft 3 down by hauling in the tether 2. Such a hauling down advantageously be assisted by increasing the tension in the tether 2 by activating the propellers 6. A landing zone may advantageously be in the form of a so-called bear trap, that is a device having a locking mechanism locking the aircraft to the device and is activated by the aircraft's 3 impact on the device. Thus, the one or more propellers 6 of the tethered aircraft 3 as disclosed herein can advantageously be used to make a controlled landing, such as a haul down or bear-trapping.

Thus, this may typically be considered as a dynamic heave compensated positioning technology. While the aircraft 3 is hanging from or controlled at just above stall, the propellers 6 assist the aircraft 3 with lift, the wind pushes the aircraft 3 downwind due to wind creating force on wings and the aircraft 3 is hauled in by a winch 9 combined with the generator 1.

Thereby, the propellers 6 create a counter force and lift to the hauling/reeling in by the winch 9 which increases stability during flight significantly

### On heating elements - de-icing

Icing refers the situation where the surface of in particular the wings of the aircraft 3 is covered partly or wholly by ice. This may have two major impacts on the aircraft i) the weight of the aircraft is reduced significantly ii) the aerodynamic properties of the aircraft are altered significantly. Thus, icing can result in no-flyable conditions for an aircraft 3. According to preferred embodiments of the invention, the possibility to integrate heating elements 10, threads, infrared or other electrical powered means to de-ice the wings and other surfaces of the aircraft has been conceptualised. Such de-icing has been made possible with using some of the electrical energy produced by the propellers 6, preferably during the phase where the aircraft 3 returns the ground position (reeling-in), but also in typically worst case scenarios during the production phase (reeling-out) to de-ice and for anti-icing, that is to prevent icing from occurring, thereby increasing the performance compared to an iced aircraft.

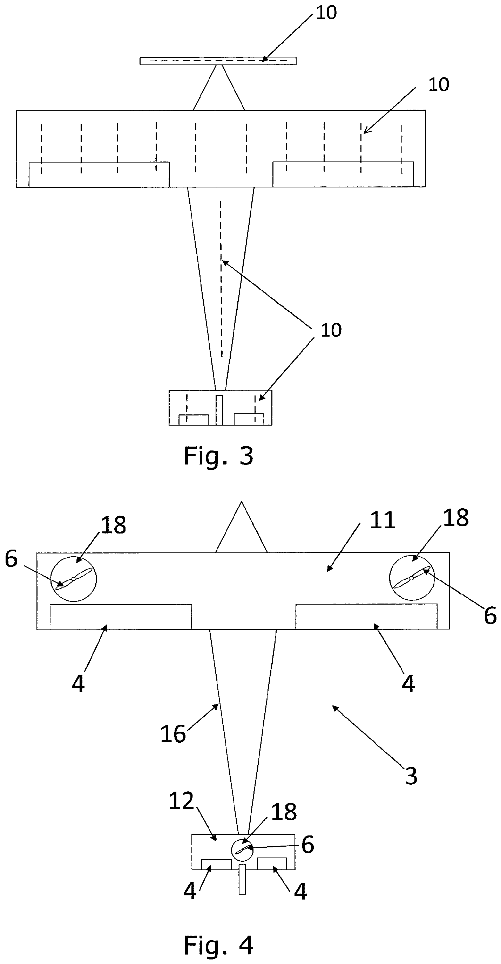

Figure 3 shows an aircraft 3 as seen from above. The dotted lines labelled 10 indicates heating elements such as electrical wires which heats up when electrical current runs through the wires. Please note that such heating elements may also be provided in the propeller(s) 6.

A further important issue, that may be solved by heating elements 10 is for de-icing the bridles. During use, the bridles may be covered by ice and while such icing may not affect the aerodynamic properties of the aircraft 3 as such, the weight of the bridles may be increased substantially and in extreme cases to an extend where the bridles weigh down the aircraft. In addition, while the reeling in may have the effect of cracking of the ice from the bridle when the bridle is reeled up in the winch, the ice may deposit in the winch and thereby jam the reeling in/up. By integrating heating elements in the bridle, the bridle may be heated thereby avoiding formation of ice or remove ice already formed on the bridle.

Reference is made to fig. 4 illustrating schematically a further embodiment according to the present invention. As disclosed in fig. 4, vertical axis propellers 6 connected to motor-generator 7 (not shown) are each arranged in a through-going opening 18 of the wings 11, 12. Vertical refers here refers to as above to the longitudinal direction of the aircraft 3.

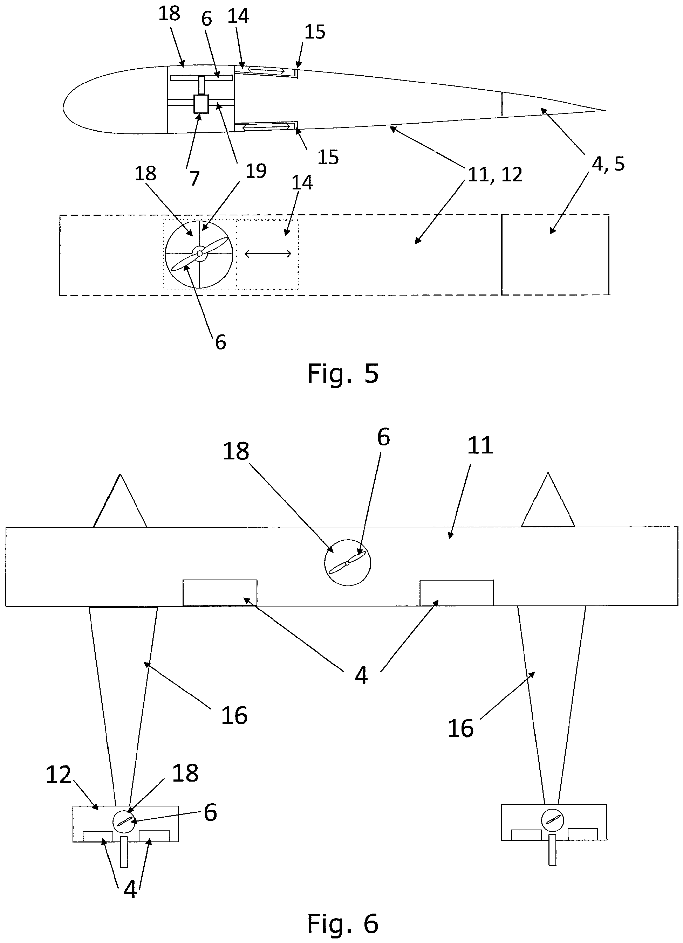

A particular preferred advantage of arranging the propellers 6 in through going openings 18 is that when the propellers 6 are not to be applied, the through going openings 18 may be closed by covers 14 providing a wing with the desired airfoil cross section without openings. This is disclosed in fig. 5. As disclosed in fig. 5, the covers 14 are situated in sleeves 15 behind the propeller 6 and respectively at the upper and lower surface of the wing 11, 12. A cover 14 is moved into its sleeve 15 when the propeller 6 is to be used and moved out of its sleeve 15 to a position to cover the through going opening in upper respectively lower side and form the skin of the wing when covering the opening, thereby reducing drag and increasing lift. The configuration disclosed in connection with fig. 4 and 5 can also be applied for horizontal axis propellers to act like horizontal axis duct fans/turbines.

While the configuration disclosed in fig. 4 with a propeller 6 arranged near the tips of the main wings 11 and centrally arranged in the tail wing 12, other configurations are considered within the scope of the present invention. For instance, instead of (or in combination with) the two propellers at the tips of the main wings 11, a centrally arranged propeller 6 connected to a motor-generator may be installed.

Fig. 6 illustrates schematically a further embodiment of the invention. As disclosed in fig. 6, the aircraft 3 has two fuselages 16 connected through the main wing 11. In the disclosed embodiment, the aircraft 3 has a single, centrally arranged (chord wise as well as span wise) propeller 6 in the main wing 11 and a propeller 6 arranged centrally (chord wise as well as span wise) in each of the tail wings 12. The propellers 6 are connected to a motor-generator (not disclosed). Instead of or in combination with the centrally arranged propeller 6 of the main wing 11, two propellers 6 may be arranged as disclosed in fig. 4. Such an arrangement of propellers 6 may provide excellent stability and control as disclosed above.

### On tilt-able propellers

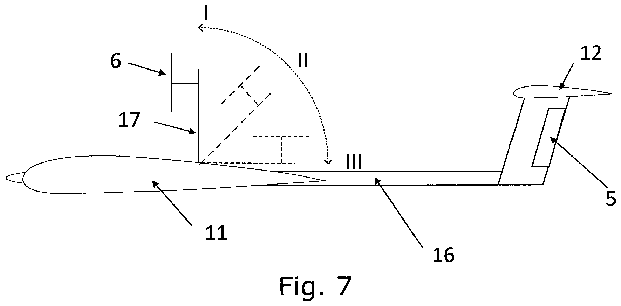

As presented above, there are often different effects or benefits obtainable by horizontal and vertical axis propellers. In order to provide the possibility to change between the effects obtainable, the inventors have come up with the solution presented in fig. 7.

Fig. 7 discloses schematically a further embodiment of the present invention. In the disclosed embodiment, the propeller 6 is arranged on a stand 17 which is pivotally mounted on the aircraft 3 with a pivot axis parallel with spanwise direction of the wings. The propeller 6 is connected to a motor-generator (not disclosed). The stand 17 with propeller 6 is arranged on the upper side of the aircraft 3. As also disclosed the rotational axis of the propeller 6 is raised above the fuselage 16 of the aircraft 3. The stand 17 is connected to an actuator (not shown) which controls the movement of the stand 17. Both during flight mode and during harbour (landing) mode of the aircraft 3, the stand 17 may pivoted thereby altering the angle between the rotational axis of the propeller 6 and incoming wind.

Typically, position I (see figure 7), where the stand 7 is perpendicular to the longitudinal direction of the fuselage 16, is used in a forward flight motion. In this position, the propeller 6 operates similar to an ordinary propulsion generating propeller of an aircraft or as an energy producing propeller depending on whether the propeller 6 is activated to produce thrust or activated to generate electrical power.

In position III, where the stand 7 is parallel with the longitudinal direction of the fuselage 16, the propeller 6 is used to generate a hovering propulsion. This position is typically used during take-off and landing where the propeller 6 provide an assisted lift to the aircraft 3.

Position II, where the stand 7 is situated in between position I or III, is referred to as a transition flight position and is typically used for addition of lift at low wind speed and/or low flight speed. This may often be the case where the ground wind speed is low and the wind speed at higher altitudes are higher, whereby the aircraft 3 may, by use of the propeller 6 in position II, be positioned at an altitude sufficient to carry the aircraft further upward.

Position II may also be applied as an low wind strategy as well, e.g. when wind conditions are marginal and thereby requires lift assisted by the propeller 6. During a reeling-out-reeling in (loop) propeller 5 can be run at a constant speed based on Vₛₜₐₗₗ of the aircraft (stall velocity). On the reeling-in (down stroke) of the production loop, the aircraft uses mass gravitation plus energy of the wind to accelerate and the propeller may be operated in it energy production mode. On the reeling-out (upstroke), the aircraft gets some energy from the wind, but needs some assistance from the propellers to assist on the upstroke and the propeller may be operated in its lift producing mode. This is viable, as long as the net energy production of the kite plus batteries are kept levels >1. If this goes below 1, meaning some energy is required from the batteries (more than what is generated on the down stroke of the loop), then the aircraft should land, unless weather forecasts are expected to pick up again soon.

For high wind strategy, the propellers can be used to add drag, to slow down the aircraft.

### On pitchable propellers

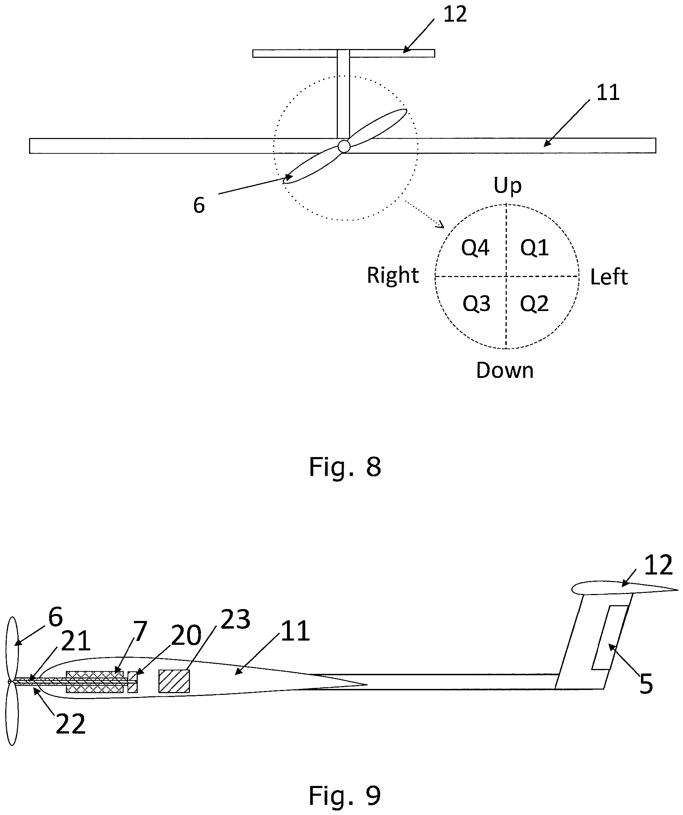

Reference is made to fig. 8 schematically disclosing an aircraft 3 according to a further embodiment of the present invention. In the embodiment of fig. 8, the aircraft 3 has a propeller 6 in the front of the aircraft 3 with a rotational axis parallel to the longitudinal extension of the fuselage 16. The aircraft 3 is disclosed in a front view.

The propeller 6 comprises two blades (the propeller 6 may have more than two blades). Each the blades are mounted pivotally along the longitudinal extension of the blade on the axis of the propeller. Thereby, the pitch angle of the blades can be changed. This may be referred to a pitchable propeller blade. While the pitch angle of the blade in many of the preferred embodiments disclosed herein is collectively adjustable so that all of the propeller's blades are situated all time at the same pitch angle, the embodiment of fig. 8 is characterised by the pitch angle of each blade is adjustable individually, that is each blade may be set at an individual pitch angle which may or may not differ from the pitch angles of the other blades.

The setting of the pitch angle is embodied in such a manner that the pitch angle may be changed from a maximum to a minimum pitch angle during a single rotation of the blade. This is preferably embodied by each blade is connected at its root to an linear actuator which upon elongation alters the pitch setting of the blade. When such individual changes in pitch angle are employed, the centre of effort for the propeller 6 can be moved from the centre of the propeller to one of the four quadrants labelled Q1 to Q4 in fig. 8.

The individual pitch setting has inter alia the advantageous that e.g. the vertical flight direction (relatively to ground) or the direction of the aircraft 3 during flight can be manipulated by moving the centre of effort to one of the quadrant Q1 to Q4. This may reduce the amount of propellers required, wires, flaps, rudders etc. to control the aircraft's direction of flight. Typically one or two propellers with individual pitchable propeller blades would be sufficient for both controlling pitch, yaw and roll of the aircraft 3.

The principle used with the pitchable propeller blades is that an increase in pitch angle increases lift produced by the blade. Thus, the following control scheme can be used to control the flight of the aircraft 3 (see fig. 8 for legends used):

| | |
|---|---|
| Lift increased in Q1 and Q2 relatively to lift in Q3 and Q4: | Yaw towards right |
| Lift increased in Q3 and Q4 relatively to lift in Q1 and Q2: | Yaw towards left |
| Lift increased in Q4 and Q1 relatively to lift in Q2 and Q3 | Decrease angle of attack for wings/ aircraft pitch decrease |
| Lift increased in Q2 and Q3 relatively to lift in Q1 and Q4 | Increase angle of attack for wings/ aircraft pitch increase |
| Lift increased in Q1 relatively to lift in Q2, Q3, Q4 | Roll right down |
| Lift increased in Q4 relatively to lift in Q1, Q2, Q3 | Roll left down |

It is noted that instead of operating on the basis of lift, the pitchable blades may be operated on the basis of drag.

Pitchable propeller blades has the advantage that the motor-generator rotating the propeller can be set to operate at an optimal rotational speed (as a loss in lift due to lower rotational speed may be balanced by increasing the lift and vice versa). By this, the energy stored in the battery can be used most efficient and/or the battery itself may last longer.

As for the control of the control surfaces 4, the pitch of the propellers may be controlled by control signal received from a ground based control unit, or the control may be based on on-board sensor to enable autonomy flight.

Reference is made to fig. 9 which shows a further example on an aircraft according to the present invention having pitchable propellers 6 - the embodiment shown in fig. 9 may resemble a cross sectional view of the embodiment shown in fig. 8; however, in the embodiment shown in fig. 9, a propeller 6 is arranged in the main wing 11 on both side of the fuselage 16, whereas in fig. 8 a single propeller 6 is arranged in the fuselage 16.

As disclosed, the propellers 6 being connected through a shaft to the motor-generator 7 in a manner allowing the pitch angle of the propeller blades to be adjusted. This is accomplished by the servo mechanism comprising an actuator 21 running e.g. inside the shaft 22 of the propeller 6, The actuator 21 is connected through a gear with the blades of the propeller 6 to alter the pitch setting of the propeller blade. The movement of the actuator is controlled by a control unit 20 comprising an hydraulic or electrical motor providing the movement of the actuator 21 and thereby the pitch setting of the propeller blade.

### On operating the motor-generator(s) with constant rotational speed (RPM)

By being able to set the pitch angle of the propeller blade at a given pitch, the propeller and thereby the motor-generator can be operated at optimal rotational conditions, optimal RPM, that is producing sufficient thrust by least energy consumption whereby the energy stored in the battery can last longer. Typically, the rotational speed is defined to be substantial constant and the thrust produced is altered by changing the pitch to produce the thrust needed to assist the flying of the aircraft.

### On co-axial propellers

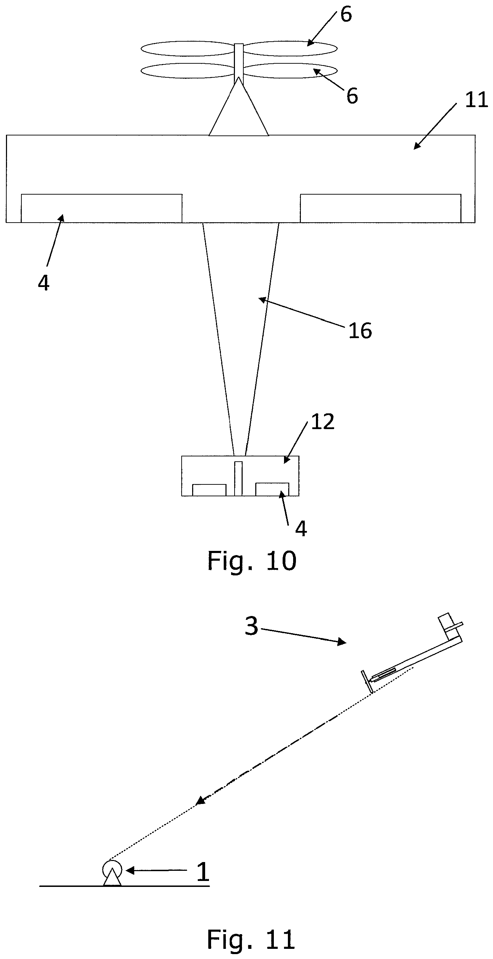

Reference is made to fig. 10 disclosing schematically an embodiment of an aircraft 3 with co-axial propellers. As disclosed, two propellers 6 are arranged on a common shaft aligned with the longitudinal direction of the aircraft and extend in front of the aircraft. The propellers 6 may alternatively or in combination with the configuration shown in fig. 10 be vertically arranged e.g. in slots (as in fig. 4) and the pitch of the propeller blade may be fixed or pitch-able (either individually or collectively) as disclosed herein. Further the camber may be changeable. The strategy as to control of the rotational speed may also be employed.

In the particular preferred embodiment shown in fig. 10, the two co-axial propellers can be used to solve the problem which may occur if only a single propeller is used, namely that if the airplane is stalled, the torque generated from a single propeller arranged on a shaft aligned with the longitudinal direction of the aircraft will have a tendency to rotate the aircraft along its longitudinal direction. By using the co-axial arranged propeller configuration as shown in fig. 10, this can be avoided by rotating the two propellers in different direction. When the propellers 6 are individually pitch-able, the pitch settings of the propellers can be used to turn the aircraft around its own axis.

### On recharging of batteries

During the reeling-in part, the aircraft 3 will often try to fly towards the winch at the generator 1 at the ground in shortest and/or fastest fly path. In general, the reeling-in part is often sought minimized as minimization of the flight distance results in shorter time (faster return) often results in less energy loss per cycle. If allowed to fly in such a flight path, airbrakes or the like must most often be applied in order to control the flight to avoid stall etc. Such use of airbrakes represent a loss compared to what could have been extracted from the wind and the present invention will often apply the propellers 6 to control the flight (together with flaps and other control surfaces). The propellers 6 may advantageously be applied in their power generating mode, that is the flight of the aircraft 3 make the propellers 6 rotating which produces electrical energy by the motor-generator 7, which electrical energy is stored in the battery 23. The rotation of the propellers 6 will slow down the aircraft 3 as if an airbrake or the like was activated - however compared to the use of an airbrake, the rotation of the propellers 6 produces electrical energy stored in the battery 23. The electrical energy can be used - as disclosed herein - when the propellers 6 are used to generate a thrust. Further, when embodying the propellers as propellers which can be retracted, folded or otherwise stowed away when not in use, it allows to have an aircraft with little aerodynamic drag during production and with controlled decent and recharge of batteries during the decent (reeling in).

If the batteries 23 are fully charged, the propellers can still be used to control the flight. This may e.g. be carried out by the energising the motor-generator 7 whereby a torque - like when electricity is generated - is provided that must be overcome by the rotation of the propellers 6 thereby slowing down the speed of the aircraft 3.

### On motor-generator connected to propellers

As presented above, it is in many of the embodiments preferred to connect each of the propellers 6 to a motor-generator 7. However, within the scope of the present invention is considered the situation where some of the propellers 7 are used for controlling the flight of the aircraft 3 only. Such propellers are therefore connected to an electrical motor. And, that some of the propellers 7 are connected to a generator for producing electrical power.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

### List of reference used:

- 1: ground positioned electrical generator
- 2: tether
- 3: aircraft
- 4: control surface on aircraft wings; on main wing(s): typically flaps, spoilers and/or ailerons; on tail wing(s): typically elevators
- 5: control surface on aircraft tail - rudder
- 6: propeller
- 7: motor-generator
- 8: electrical energy storage (battery)
- 9: winch
- 10: heating elements
- 11: main wings
- 12: tail wing
- 13: rudder
- 14: cover
- 15: sleeve
- 16: fuselage
- 17: stand
- 18: through-going opening
- 19: support structure
- 20: control unit for actuator
- 21: actuator
- 22: shaft
- 23: battery
- 24: antenna
- 25: Bridle
- 26: Connection of bridles to tether

## Claims

1. A tethered aircraft system for producing electrical energy, the system comprises:
- a ground positioned electrical generator (1),
- an aircraft (3) comprising
- one or more activatable propellers (6) each connected to a motor-generator (7),
- an on-board electrical energy storage (8) connected to the motor-generator(s) (7),
- moveable control surfaces (4) connected to the wings of the aircraft (3) for changing the lift coefficient and/or drag coefficient of the aircraft (3) either locally or globally for the aircraft,
- a tether (2) connected at one end to the aircraft (3) and distal thereto connected to said generator (1) so that a pull in the tether result in a rotation of generator's rotor, wherein tether is electrically isolated from the electrical energy storage (8) and from the power circuit of the motor-generator(s) (7),
wherein the system is adapted to activate the one or more, such as all, of said activatable propellers (6), at least parttime, during reeling-in to produce electrical power.

2. A tethered aircraft system according to claim 1, wherein the rotor of the ground positioned electrical generator (1) is adapted to wind-up tether during reeling in of the aircraft.

3. A tethered aircraft system according to claim 1 or 2, wherein the system is adapted to detect reeling-in by measuring, preferably at the aircraft, the tension in the tether.

4. A tethered aircraft system according to any of the preceding claim, wherein one or more, such as all of said activatable propellers (6) are adapted to be activated during reeling-in to produce electrical power only if the wind speed, preferably the relative wind speed, is above a certain limit.

5. A tethered aircraft system according to any of the preceding claims, the aircraft further comprising an anemometer or pitot tube arranged on the aircraft configured for determining the wind speed at the altitude of the aircraft.

6. A tethered aircraft system according to any of the preceding claims, wherein the system is adapted to activate the one or more, such as all, activatable propellers to produce electrical power only during reeling-in.

7. A tethered aircraft system according to any of the preceding claims, wherein one or more such as each of the propellers (6) are selectively activatable to power the motor-generator (7) to produce electrical power during the reelin-in phase.

8. A tethered aircraft system according to any of the preceding claim, wherein the system is adapted to store electrical power produced by the motor-generator (7) in the electrical energy storage (8) if the wind speed is sufficient to provide reeling-out and/or reeling-in without the need for the propellers to add lift, by the propellers producing trust, to the aircraft.

9. A tethered aircraft system according to any of the preceding claims, wherein one or more, such as each of the propellers (6) is adapted to be activated to produce thrust by supplying the motor-generator (7) with electrical energy from the electrical energy storage (8) if the wind speed is in-sufficient to allow the aircraft (3) to glide on its own motion to towards the ground based generator during reeling-in.

10. A tethered aircraft system according to any of the preceding claims, wherein one or more, such as each of the propellers (6) is adapted to be activated to produce thrust by supplying the motor-generator (7) with electrical energy from the electrical energy storage (8) if the wind speed is in-sufficient to allow the aircraft (3) to glide on its own motion away from the ground based generator during reeling-out.

11. A tethered aircraft system according to any of the preceding claims, wherein one or more, such as each of the propellers (6) are adapted to be activated by connecting the motor-generator (7) to the electrical energy storage (8) by a switch electrically connecting and dis-connecting the motor-generator (7) with the electrical energy storage (8).

12. A tethered aircraft system according to any of the preceding claims, wherein one or more, such as each of the propellers (6) are activatable by each of the blade of the propellers being mounted at the root controllable rotatable along an axis parallel to the chord of the blade at the root, so that the pitch angle can be controlled.

13. A tethered aircraft system according to any of the preceding claims, wherein one or more, such as each of the propellers (6) are activatable by being retractable from a sleeve in which the blades are located.

14. A tethered aircraft system according to any of the preceding claims, wherein the aircraft (3) comprises a controlling unit, said control unit
- being connected to and being adapted to control the control surfaces (4) in response to a control signal transmitted the control unit, and
- comprising a positioning system for determining position data such as the altitude, the yaw angle, the roll angle and pitch angle of the aircraft (3).

15. A method for producing electrical energy, wherein the method utilises a tethered aircraft system according to any of the preceding claims, the method comprises when the aircraft (3) is airborne:
- controlling the lift coefficient of the aircraft by movement of the control surfaces (4) and/or by activating one or more of the activatable propellers so that a pull is produced in the tether (2) sufficient to rotate the rotor of the ground positioned electrical generator (1) resulting in a reeling-out of the aircraft (3),
- controlling the lift coefficient and/or draft coefficient of the aircraft (3) either locally or globally by movement of the control surfaces (4) and/or by activating one or more of the activatable propellers so that the aircraft performs a gliding motions towards the ground positioned electrical generator resulting in a reeling-in of the aircraft (3), and
- activate the one or more, such as all, of said activatable propellers (6) at least parttime during a reeling-in to produce electrical power.

## Patentansprüche

1. Gehaltenes Flugzeugsystem zum Produzieren von elektrischer Energie, wobei das System Folgendes umfasst:
- einen am Boden positionierten elektrischen Generator (1),
- ein Flugzeug (3), umfassend
- einen oder mehrere aktivierbare Propeller (6), die jeweils mit einem Motor-Generator (7) verbunden ist,
- einen bordeigenen elektrischen Energiespeicher (8), der mit dem/den Motor-Generator(en) (7) verbunden sind,
- bewegliche Steuerflächen (4), die mit den Flügeln des Flugzeugs (3) verbunden sind, zum Ändern des Auftriebsbeiwerts und/oder des Widerstandsbeiwerts des Flugzeugs (3) entweder lokal oder global für das Flugzeug,
- ein Halteseil (2), das mit einem Ende des Flugzeugs (3) und distal dazu mit dem Generator (1) verbunden ist, so dass ein Ziehen an dem Halteseil in einer Drehung des Rotors des Generators resultiert, wobei das Halteseil von dem elektrischen Energiespeicher (8) und von der Leistungsschaltung des Motor-Generators/der Motor-Generatoren (7) elektrisch isoliert ist,
wobei das System dazu angepasst ist, den einen oder die mehreren, wie etwa alle, der aktivierbaren Propeller (6) zumindest vorübergehend während des Einrollens zu aktivieren, um elektrische Leistung zu produzieren.

2. Gehaltenes Flugzeugsystem nach Anspruch 1, wobei der Rotor des am Boden positionierten elektrischen Generators (1) dazu angepasst ist, das Halteseil während des Einrollens des Flugzeugs aufzuwickeln.

3. Gehaltenes Flugzeugsystem nach Anspruch 1 oder 2, wobei das System dazu angepasst ist, das Einrollen durch Messen der Spannung des Halteseils, bevorzugt an dem Flugzeug, zu erfassen.

4. Gehaltenes Flugzeugsystem nach einem der vorhergehenden Ansprüche, wobei einer oder mehrere, wie etwa alle, der aktivierbaren Propeller (6) dazu angepasst sind, während des Einrollens aktiviert zu werden, um elektrische Leistung nur dann zu produzieren, wenn die Windgeschwindigkeit, bevorzugt die relative Windgeschwindigkeit, über einer bestimmten Grenze liegt.

5. Gehaltenes Flugzeugsystem nach einem der vorhergehenden Ansprüche, wobei das Flugzeug ferner ein an dem Flugzeug angeordnetes Anemometer oder Pitot-Rohr umfasst, das zum Bestimmen der Windgeschwindigkeit auf der Flughöhe des Flugzeugs konfiguriert ist.

6. Gehaltenes Flugzeugsystem nach einem der vorhergehenden Ansprüche, wobei das System dazu angepasst ist, den einen oder die mehreren, wie etwa alle, aktivierbaren Propeller zu aktivieren, um elektrische Leistung nur während des Einrollens zu produzieren.

7. Gehaltenes Flugzeugsystem nach einem der vorhergehenden Ansprüche, wobei der eine oder die mehreren, wie etwa jeder, der Propeller (6) wahlweise aktivierbar sind, um den Motor-Generator (7) anzutreiben, um elektrische Leistung während der Einrollphase zu produzieren.

8. Gehaltenes Flugzeugsystem nach einem der vorhergehenden Ansprüche, wobei das System dazu angepasst ist, durch den Motor-Generator (7) produzierte elektrische Leistung in dem elektrischen Energiespeicher (8) zu speichern, wenn die Windgeschwindigkeit ausreichend ist, um Ausrollen und/oder Einrollen zu ermöglichen, ohne dass die Propeller zusätzlich Auftrieb für das Flugzeug bereitstellen müssen, indem die Propeller Schubkraft produzieren.

9. Gehaltenes Flugzeugsystem nach einem der vorhergehenden Ansprüche, wobei einer oder mehrere, wie etwa jeder, der Propeller (6) dazu angepasst ist, aktiviert zu werden, um Schubkraft durch Versorgen des Motor-Generators (7) mit elektrischer Energie aus dem elektrischen Energiespeicher (8) zu produzieren, wenn die Windgeschwindigkeit unzureichend ist, um es dem Flugzeug (3) zu ermöglichen, während des Einrollens mit einer eigenen Bewegung zu dem bodenbasierten Generators hin zu gleiten.

10. Gehaltenes Flugzeugsystem nach einem der vorhergehenden Ansprüche, wobei einer oder mehrere, wie etwa jeder, der Propeller (6) dazu angepasst ist, aktiviert zu werden, um Schubkraft durch Versorgen des Motor-Generators (7) mit elektrischer Energie aus dem elektrischen Energiespeicher (8) zu produzieren, wenn die Windgeschwindigkeit unzureichend ist, um es dem Flugzeug (3) zu ermöglichen, während des Ausrollens mit einer eigenen Bewegung von dem bodenbasierten Generator weg zu gleiten.

11. Gehaltenes Flugzeugsystem nach einem der vorhergehenden Ansprüche, wobei einer oder mehrere, wie etwa jeder, der Propeller (6) dazu angepasst ist, durch Verbinden des Motor-Generators (7) mit dem elektrischen Energiespeicher (8) durch einen Schalter, der den Motor-Generator (7) mit dem elektrischen Energiespeicher (8) verbindet und von diesem trennt, aktiviert zu werden.

12. Gehaltenes Flugzeugsystem nach einem der vorhergehenden Ansprüche, wobei einer oder mehrere, wie etwa jeder, der Propeller (6) durch jedes der Blätter der Propeller, die an dem Fußpunkt steuerbar und drehbar entlang einer Achse parallel zu der Sehne des Blattes an dem Fußpunkt befestigt sind, aktivierbar ist, so dass der Nickwinkel gesteuert werden kann.

13. Gehaltenes Flugzeugsystem nach einem der vorhergehenden Ansprüche, wobei einer oder die mehrere, wie etwa jeder, der Propeller (6) dadurch aktivierbar sind, indem sie aus einer Hülse, in der sich die Schaufeln befinden, herausziehbar sind.

14. Gehaltenes Flugzeugsystem nach einem der vorhergehenden Ansprüche, wobei das Flugzeug (3) eine Steuerungseinheit umfasst, wobei die Steuereinheit
- mit den Steuerflächen (4) verbunden ist und dazu angepasst ist, diese als Reaktion auf ein Steuersignal, das an die Steuereinheit übertragen wird, zu steuern, und
- ein Positionierungssystem zum Bestimmen von Positionsdaten wie etwa der Höhe, dem Gierwinkel, dem Rollwinkel und dem Nickwinkel des Flugzeugs (3) umfasst.

15. Verfahren zum Produzieren elektrischer Energie, wobei das Verfahren ein gehaltenes Flugzeugsystem nach einem der vorhergehenden Ansprüche nutzt, wobei das Verfahren Folgendes umfasst, wenn das Flugzeug (3) im Flug ist:
- Steuern des Auftriebsbeiwerts des Flugzeugs durch Bewegung des Steuerflächen (4) und/oder durch Aktivieren eines oder mehrerer der aktivierbaren Propeller, so dass ein Ziehen an dem Halteseil (2) erzeugt wird, das ausreichend ist, um den Rotor des am Boden positionierten elektrischen Generators (1) zu drehen, was in einem Ausrollen des Flugzeugs (3) resultiert,
- Steuern des Auftriebsbeiwerts und/oder des Widerstandsbeiwerts des Flugzeugs (3) entweder lokal oder global durch Bewegung der Steuerflächen (4) und/oder durch Aktivieren eines oder mehrerer der aktivierbaren Propeller, so dass das Flugzeug eine Gleitbewegung in Richtung des am Boden positionierten elektrischen Generators durchführt, was in einem Einrollen des Flugzeugs (3) resultiert, und
- Aktivieren des einen oder der mehreren, wie etwa aller, der aktivierbaren Propeller (6) zumindest vorübergehend während eines Einrollens, um elektrische Leistung zu produzieren.

## Revendications

1. Système d'aéronef captif pour produire de l'énergie électrique, le système comprenant :
- un générateur électrique positionné au sol (1),
- un aéronef (3) comprenant
- une ou plusieurs hélices actionnables (6) raccordées chacune à un moteur-générateur (7),
- un dispositif de stockage d'énergie électrique embarqué (8) raccordé au(x) moteur(s)-générateur(s) (7),
- des surfaces de commande mobiles (4) raccordées aux ailes de l'aéronef (3) pour modifier le coefficient de portance et/ou le coefficient de traînée de l'aéronef (3) localement ou globalement pour l'aéronef,
- une attache (2) raccordée au niveau d'une extrémité à l'aéronef (3) et raccordée au niveau d'une extrémité distale par rapport à celle-ci audit générateur (1) afin qu'une traction dans l'attache entraîne une rotation du rotor du générateur, ladite attache étant électriquement isolée du dispositif de stockage d'énergie électrique (8) et du circuit d'énergie électrique du ou des moteur(s)-générateur(s) (7),
ledit système étant adapté pour actionner l'une ou plusieurs, telles que l'ensemble, desdites hélices actionnables (6), au moins à temps partiel, durant l'enroulement pour produire de l'énergie électrique.

2. Système d'aéronef captif selon la revendication 1, ledit rotor du générateur électrique positionné au sol (1) étant adapté pour enrouler l'attache durant l'enroulement de l'aéronef.

3. Système d'aéronef captif selon la revendication 1 ou 2, ledit système étant adapté pour détecter l'enroulement en mesurant, de préférence au niveau de l'aéronef, la tension dans l'attache.

4. Système d'aéronef captif selon l'une quelconque des revendications précédentes, une ou plusieurs, telles que l'ensemble desdites hélices actionnables (6) étant adaptées pour être actionnées durant l'enroulement pour produire de l'énergie électrique uniquement si la vitesse du vent, de préférence la vitesse du vent relatif, est supérieure à une certaine limite.

5. Système d'aéronef captif selon l'une quelconque des revendications précédentes, ledit aéronef comprenant en outre un anémomètre ou un tube de Pitot agencé sur l'aéronef conçu pour déterminer la vitesse du vent au niveau de l'altitude de l'aéronef.

6. Système d'aéronef captif selon l'une quelconque des revendications précédentes, ledit système étant adapté pour actionner la ou les hélices actionnables, telles que l'ensemble, pour produire de l'énergie électrique uniquement durant l'enroulement.

7. Système d'aéronef captif selon l'une quelconque des revendications précédentes, une ou plusieurs, telles que chacune, des hélices (6) pouvant être actionnées sélectivement pour faire marcher le moteur-générateur (7) afin de produire de l'énergie électrique durant la phase d'enroulement.

8. Système d'aéronef captif selon l'une quelconque des revendications précédentes, ledit système étant adapté pour stocker de l'énergie électrique produite par le moteur-générateur (7) dans le dispositif de stockage d'énergie électrique (8) si la vitesse du vent est suffisante pour assurer un déroulement et/ou un enroulement, sans qu'un accroissement de la portance de l'aéronef au moyen des hélice, par les hélices produisant une poussée, ne soit nécessaire.

9. Système d'aéronef captif selon l'une quelconque des revendications précédentes, une ou plusieurs, telles que chacune des hélices (6), étant adaptées pour être actionnées pour produire une poussée en fournissant au moteur-générateur (7) de l'énergie électrique provenant du dispositif de stockage d'énergie électrique (8) si la vitesse du vent est insuffisante pour permettre à l'aéronef (3) de planer de par son propre déplacement vers le générateur au sol durant l'enroulement.

10. Système d'aéronef captif selon l'une quelconque des revendications précédentes, une ou plusieurs, telles que chacune des hélices (6), étant adaptées pour être actionnées pour produire une poussée en fournissant au moteur-générateur (7) de l'énergie électrique provenant du dispositif de stockage d'énergie électrique (8) si la vitesse du vent est insuffisante pour permettre à l'aéronef (3) de planer de par son propre déplacement en s'éloignant du générateur au sol durant le déroulement.

11. Système d'aéronef captif selon l'une quelconque des revendications précédentes, une ou plusieurs, telles que chacune des hélices (6) étant adaptées pour être actionnées en raccordant le moteur-générateur (7) au dispositif de stockage d'énergie électrique (8) au moyen d'un commutateur raccordant et séparant électriquement le moteur-générateur (7) du dispositif de stockage d'énergie électrique (8).

12. Système d'aéronef captif selon l'une quelconque des revendications précédentes, une ou plusieurs, telles que chacune des hélices (6), pouvant être actionnées par chacune des pales des hélices qui sont montées au niveau de l'emplanture de manière à pouvoir être commandées, rotatives, le long d'un axe parallèle à la corde de la pale au niveau de l'emplanture, afin que l'angle de tangage puisse être commandé.

13. Système d'aéronef captif selon l'une quelconque des revendications précédentes, une ou plusieurs, telles que chacune des hélices (6) pouvant être actionnées en étant rétractables à partir d'un manchon dans lequel les pales sont situées.

14. Système d'aéronef captif selon l'une quelconque des revendications précédentes, ledit aéronef (3) comprenant une unité de commande, ladite unité de commande
- étant raccordée aux surfaces de commande (4) et étant adaptée pour commander celles-ci en réponse à un signal de commande transmis à l'unité de commande, et
- comprenant un système de positionnement pour déterminer des données de position telles que l'altitude, l'angle de lacet, l'angle de roulis et l'angle de tangage de l'aéronef (3).

15. Procédé pour la production d'énergie électrique, le procédé utilisant un système d'aéronef captif selon l'une quelconque des revendications précédentes, le procédé comprenant lorsque l'aéronef (3) est en vol :
- commander le coefficient de portance de l'aéronef par le déplacement des surfaces de commande (4) et/ou l'actionnement de l'une ou plusieurs des hélices actionnables afin qu'une traction soit produite dans l'attache (2) suffisante pour entraîner en rotation le rotor du générateur électrique positionné au sol (1) résultant en un déroulement de l'aéronef (3),
- commander le coefficient de portance et/ou le coefficient de traînée de l'aéronef (3) localement ou globalement en déplaçant les surfaces de commande (4) et/ou en actionnant une ou plusieurs des hélices actionnables afin que l'aéronef effectue un déplacement de vol plané vers le générateur électrique positionné au sol résultant en un enroulement de l'aéronef (3), et
- actionner l'une ou plusieurs, telles que l'ensemble, desdites hélices actionnables (6) au moins à temps partiel durant un enroulement pour produire de l'énergie électrique.
